# EUROPEAN PATENT APPLICATION

(11) **EP 4 614 849 A1**
(43) Date of publication of application: **10.09.2025**
(21) Application number: 23929847.4
(22) Date of filing: 22.09.2023
(51) Int. Cl.: H04L 1/1607, H04W 74/08

(54) **COMMUNICATION SYSTEM, AIR INTERFACE RESERVATION METHOD AND ACCESS DEVICE**

(30) Priority: 30.03.2023 CN 202310364738
(71) Applicant: Huawei Technologies Co., Ltd., Shenzhen, Guangdong 518129 (CN)
(72) Inventor: GAN, Shuang, Shenzhen, Guangdong 518129 (CN); QIU, Hao, Shenzhen, Guangdong 518129 (CN); WANG, Xiang, Shenzhen, Guangdong 518129 (CN)
(74) Representative: Maiwald GmbH
(86) International application number: PCT/CN2023/120763
(87) International publication number: WO 2024/198273

(57) **Abstract**

This application provides a communication system, and is applied to the communication field. The communication system includes N wireless access devices. The N wireless access devices include a first access device and a second access device. The first access device is configured to send a first control frame. The first control frame includes a first field. The first field includes an identifier of the second access device. The second access device is configured to: receive the first control frame, and return a clear to send CTS frame. The first control frame is used for reserving a target time period. The target time period includes a first time period and a second time period. The first time period is used for one access device in the N wireless access devices to perform air interface transmission. The second time period is used for the second access device to perform air interface transmission. **In** technical solutions according to this application, air interface reservation is performed for multiple access devices through one control frame, to save an air interface resource, so that transmission efficiency is improved.

## Description

This application claims priority to Chinese Patent Application No. CN202310364738.5, filed with the China National Intellectual Property Administration on March 30, 2023 and entitled "COMMUNICATION SYSTEM, AIR INTERFACE RESERVATION METHOD, AND ACCESS DEVICE", which is incorporated herein by reference in its entirety.

### TECHNICAL FIELD

This application relates to the communication field, and in particular, to a communication system, an air interface reservation method, and an access device.

### BACKGROUND

A passive optical network (passive optical network, PON) includes an optical line termination (optical line termination, OLT), an optical distribution network (optical distribution network, ODN), and multiple optical network terminations (optical network terminations, ONTs). In the PON, a collision may occur in a wireless network between the multiple ONTs. For example, if two ONTs simultaneously transmit data to stations (Stations, STAs) associated with the two ONTs respectively, the data sent by the two ONTs collides. In actual application, a collision probability may be reduced through a carrier sense multiple access with collision avoidance (carrier sense multiple access with collision avoidance, CSMA/CA) mechanism and a request to send with clear to send (request to send with clear to send, RTS/CTS) mechanism.

However, the RTS/CTS mechanism consumes a large quantity of air interface resources, and this causes a decrease in transmission efficiency.

### SUMMARY

This application provides a communication system, an air interface reservation method, and an access device. Air interface reservation is performed for multiple access devices through one control frame, to save an air interface resource, so that transmission efficiency is improved.

A first aspect of this application provides a communication system. The communication system includes N wireless access devices. N is an integer greater than 1. The N wireless access devices include a first access device and a second access device. The first access device is configured to send a first control frame. The first control frame includes a first field. The first field includes an identifier of the second access device. The second access device is configured to: receive the first control frame, and return a clear to send (clear to send, CTS) frame. The first control frame is used for reserving a target time period. The target time period includes a first time period and a second time period. The first time period is used for one access device in the N wireless access devices to perform air interface transmission. The second time period is used for the second access device to perform air interface transmission.

In an optional implementation of the first aspect, the first access device is further configured to: receive the CTS frame returned in response to the first control frame, and send scheduling information to the second access device based on the CTS frame returned in response to the first control frame. The second access device is further configured to perform air interface transmission in the second time period based on the scheduling information. In this application, air interface reservation and air interface scheduling are performed through a same access device, to reduce overheads generated in an air interface reservation process, so that an air interface resource is saved.

In an optional implementation of the first aspect, the N wireless access devices further include a primary access device. The primary access device is configured to transmit first information to the first access device. The first information includes information in the first field. The first access device is further configured to generate the first control frame based on the first information. The N wireless access devices may include the primary access device and N-1 secondary access devices. The secondary access devices may be connected through the primary access device. The primary access device can more conveniently obtain buffer information of the secondary access device or buffer information of a STA associated with the secondary access device. The primary access device may generate the first information based on the buffer information, in other words, the primary access device generates a reservation list based on the buffer information. The reservation list is an access device identifier in the first field. The reservation list may change based on a change of the buffer information. For example, the primary access device adds a corresponding secondary access device to the reservation list only when the buffer information indicates that a size of to-be-sent data is greater than 0. In actual application, the first access device may alternatively generate a fixed reservation list. However, the fixed reservation list may cause a waste of an air interface resource. For example, the first access device may allocate an air interface transmission time period to an access device that has no to-be-sent data. In this application, air interface reservation is performed through the reservation list of the primary access device, so that an air interface transmission resource can be saved.

In an optional implementation of the first aspect, the first information further includes duration information of the target time period. In actual application, the first access device may alternatively reserve default duration. However, a size of data that the access device needs to perform air interface transmission may change. Therefore, the default duration may not meet a requirement of the air interface transmission, or may cause a waste of an air interface. In this application, reserved duration is allocated by the primary access device, so that the waste of the air interface can be reduced. Therefore, this application can improve efficiency of the air interface transmission.

In an optional implementation of the first aspect, the first access device is further configured to: receive the CTS frame returned in response to the first control frame, generate second information based on the CTS frame returned in response to the first control frame, and transmit the second information to the primary access device. The primary access device is further configured to: send first scheduling information to the first access device based on the second information, and send second scheduling information to the second access device based on the second information. The first scheduling information includes information about the first time period. The second scheduling information includes information about the second time period. The first access device is further configured to perform air interface transmission in the first time period based on the first scheduling information. The second access device is further configured to perform air interface transmission in the second time period based on the second scheduling information. The secondary access devices are connected through the primary access device. Therefore, scheduling information is sent by the primary access device, so that efficiency of air interface scheduling can be improved.

In an optional implementation of the first aspect, the first information is a physical layer operations, administration and maintenance (physical layer operations, administration and maintenance, PLOAM) frame or an optical network unit management and control interface (ONU management and control interface, OMCI) frame. The information in the first field is located in a data field in the Ploam frame or a message content field in the OMCI frame.

In an optional implementation of the first aspect, the first field further includes an identifier of the primary access device. The primary access device is further configured to: receive the first control frame, and return the CTS frame. The target time period further includes a third time period. The third time period is used for the primary access device to perform air interface transmission. Air interface reservation is performed for more access devices through one control frame, to save an air interface resource, so that transmission efficiency is improved.

In an optional implementation of the first aspect, a quantity of access device identifiers included in the first field ranges from 1 to 4. The quantity of identifiers may be 1 or 4. When the quantity of identifiers is excessively large, excessively long time may need to be reserved for one control frame, and this is unfavorable to quality requirements of some low-latency services. Therefore, this application can reduce a granularity of reserved duration, so that a service latency is reduced.

In an optional implementation of the first aspect, one access device is a third access device in the N wireless access devices. The first field further includes an identifier of the third access device. The third access device is configured to: receive the first control frame, and return the CTS frame. The first control frame is a multi-user request to send (multiple user-RTS, MU-RTS) frame. The MU-RTS frame is used, to avoid multiple times of RTS/CTS interaction, so that air interface efficiency is improved.

In an optional implementation of the first aspect, the first field includes only the identifier of the second access device, and the first control frame is a request to send (request to send, RTS) frame. A length of the MU-RTS frame is greater than that of the RTS frame. The RTS frame is used, so that an air interface transmission resource can be saved.

A second aspect of this application provides an air interface reservation method. The air interface reservation method includes the following steps. A first access device sends a first control frame. The first control frame includes a first field. The first field includes an identifier of a second access device. The first access device receives, from the second access device, a CTS frame returned in response to the first control frame. The first control frame is used for reserving a target time period. The target time period includes a first time period and a second time period. The first time period is used for the first access device or a third access device to perform air interface transmission. The second time period is used for the second access device to perform air interface transmission.

In an optional implementation of the second aspect, the air interface reservation method further includes the following step: The first access device sends scheduling information to the second access device based on the CTS frame returned in response to the first control frame. The scheduling information is used for the second access device to perform air interface transmission in the second time period.

In an optional implementation of the second aspect, the air interface reservation method further includes the following steps. The first access device receives first information from a primary access device. The first information includes information in the first field. The first access device generates the first control frame based on the first information.

In an optional implementation of the second aspect, the air interface reservation method further includes the following steps. The first access device receives the CTS frame returned in response to the first control frame, and generates second information based on the CTS frame returned in response to the first control frame. The first access device transmits the second information to the primary access device. The second information is used for the primary access device to generate first scheduling information and second scheduling information. The second scheduling information is used for the second access device to perform air interface transmission in the second time period. The first access device receives the first scheduling information from the primary access device, and performs air interface transmission in the first time period based on the first scheduling information.

In an optional implementation of the second aspect, the first time period is used for the third access device to perform air interface transmission. The first field further includes an identifier of the third access device. The first control frame is an MU-RTS frame.

In an optional implementation of the second aspect, the first time period is used for the first access device to perform air interface transmission. The first field includes only the identifier of the second access device. The first control frame is an RTS frame.

A third aspect of this application provides an air interface reservation method. The air interface reservation method includes the following steps. A second access device receives a first control frame from a first access device. The first control frame includes a first field. The first field includes an identifier of the second access device. The second access device returns a CTS frame based on the first control frame. The second access device receives scheduling information, where the scheduling information is obtained based on the CTS frame returned in response to the first control frame. The second access device performs air interface transmission in a second time period based on the scheduling information. The first control frame is used for reserving a target time period. The target time period includes a first time period and the second time period. The first time period is used for the first access device or a third access device to perform air interface transmission.

In an optional implementation of the third aspect, the second access device receives the scheduling information from the first access device. The scheduling information is obtained by the first access device based on the CTS frame returned in response to the first control frame.

In an optional implementation of the third aspect, the second access device receives the scheduling information from a primary access device. The scheduling information is obtained by the primary access device based on second information. The second information is obtained by the first access device based on the CTS frame returned in response to the first control frame.

A fourth aspect of this application provides an access device. The access device includes a receiver and a transmitter. The transmitter is configured to send a first control frame. The first control frame includes a first field. The first field includes an identifier of a second access device. The receiver is configured to receive, from the second access device, a CTS frame returned in response to the first control frame. The first control frame is used for reserving a target time period. The target time period includes a first time period and a second time period. The first time period is used for a first access device or a third access device to perform air interface transmission. The second time period is used for the second access device to perform air interface transmission.

A fifth aspect of this application provides an access device. The access device includes a transceiver and a processor. The transceiver is configured to receive a first control frame from a first access device. The first control frame includes a first field. The first field includes an identifier of a second access device. The transceiver is further configured to return a CTS frame based on the first control frame. The transceiver is further configured to receive scheduling information, where the scheduling information is obtained based on the CTS frame returned in response to the first control frame. The processor is configured to perform air interface transmission in a second time period based on the scheduling information. The first control frame is used for reserving a target time period. The target time period includes a first time period and the second time period. The first time period is used for the first access device or a third access device to perform air interface transmission.

A sixth aspect of this application provides a computer storage medium, where the computer storage medium stores instructions, and when the instructions are executed on a computer, the computer is enabled to execute the method according to any one of the second aspect or the implementations of the second aspect, or the computer is enabled to execute the method according to any one of the third aspect or the implementations of the third aspect.

A seventh aspect of this application provides a computer program product, where when the computer program product is executed on a computer, the computer is enabled to execute the method according to any one of the second aspect or the implementations of the second aspect, or the computer is enabled to execute the method according to any one of the third aspect or the implementations of the third aspect.

### BRIEF DESCRIPTION OF DRAWINGS

FIG. 1 is a schematic structural diagram of a WLAN;
FIG. 2 is a first schematic flowchart of an air interface reservation method according to an embodiment of this application;
FIG. 3 is a second schematic flowchart of an air interface reservation method according to an embodiment of this application;
FIG. 4 is a third schematic flowchart of an air interface reservation method according to an embodiment of this application;
FIG. 5 is a schematic structural diagram of a Ploam frame;
FIG. 6 is a schematic structural diagram of an OMCI frame;
FIG. 7 is a first schematic structural diagram of an access device according to an embodiment of this application;
FIG. 8 is a second schematic structural diagram of an access device according to an embodiment of this application;
FIG. 9 is a first schematic structural diagram of a communication system according to an embodiment of this application; and
FIG. 10 is a second schematic structural diagram of a communication system according to an embodiment of this application.

### DESCRIPTION OF EMBODIMENTS

This application provides a communication system, an air interface reservation method, and an access device. Air interface reservation is performed for multiple access devices through one control frame, to save an air interface resource, so that transmission efficiency is improved. It should be understood that "first", "second", "objective", or the like used in this application is merely used for distinguishing between descriptions, and can neither be understood as an indication or implication of relative importance, nor be understood as an indication or implication of an order. In addition, for brevity and clarity, reference numbers and/or letters are repeated in multiple accompanying drawings of this application. The repetition does not indicate that there is a strict restrictive relationship between various embodiments and/or configurations.

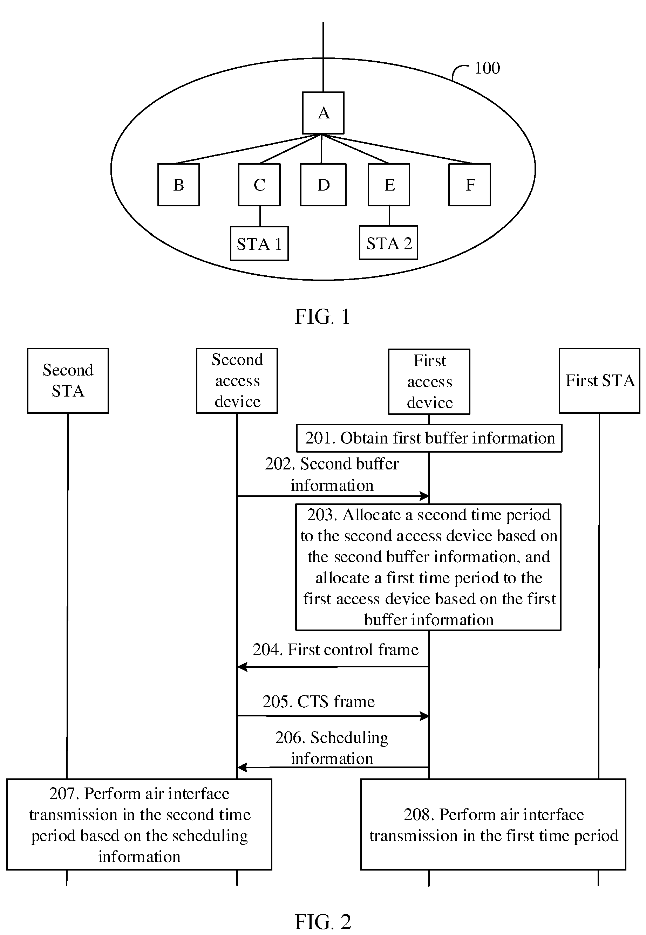

Embodiments of this application are applicable to a wireless local area network (wireless local area network, WLAN). In the WLAN, multiple wireless access devices may communicate with each other by using a same frequency, and this causes a collision. FIG. 1 is a schematic structural diagram of a WLAN. As shown in FIG. 1, a WLAN 100 includes wireless access devices A to F. The wireless access devices A to F include a primary access device A and multiple secondary access devices. In an example in FIG. 1, the multiple secondary access devices include secondary access devices B to F. The primary access device may also be referred to as a primary gateway or an access controller (access controller, AC). In a passive optical network (passive optical network, PON) system, the primary access device may be referred to as a primary optical network unit (optical network unit, ONU) or a primary optical network terminal (optical network termination, ONT). In a fiber to the room (fiber to the room, FTTR) scenario, the primary access device may be referred to as a primary FTTR unit (main FTTR unit, MMU) or a primary FTTR. The secondary access device may also be referred to as a secondary gateway or an access point (access point, AP). In the PON system, the secondary access device may be referred to as a secondary ONU or a secondary ONT. In the FTTR scenario, the secondary access device may be referred to as a sub FTTR unit (sub FTTR unit, SFU) or a secondary FTTR.

The primary access device is connected to the multiple secondary access devices in a wireless or wired manner. When the primary access device is connected to the multiple secondary access devices in the wired manner, a connection manner between the primary access device and the multiple secondary access devices may be an optical fiber, a network cable, a power line, a cable, or the like. When the primary access device is connected to the multiple secondary access devices through the optical fiber, an optical splitter may be further included between the primary access device and the multiple secondary access devices. In an uplink direction, an uplink optical signal from each of the secondary access devices is coupled to the primary access device through the optical splitter in a time division manner. In a downlink direction, the primary access device distributes downlink optical signals to all the secondary access devices through the optical splitter.

The primary access device and/or the secondary access devices can be associated with a station (Station, STA). For example, in FIG. 1, a secondary access device C is associated with a STA 1, and a secondary access device E is associated with a STA 2. The access device performs wireless communication with the STA. Multiple access devices may use a same wireless communication frequency. When the multiple access devices are close to each other, wireless networks of the multiple access devices may collide. In actual application, a collision probability may be reduced through a carrier sense multiple access with collision avoidance (carrier sense multiple access with collision avoidance, CSMA/CA) mechanism and a request to send with clear to send (ready to send with clear to send, RTS/CTS) mechanism. However, the RTS/CTS mechanism consumes a large quantity of air interface resources, and this causes a decrease in transmission efficiency.

Therefore, this application provides an air interface reservation method. FIG. 2 is a first schematic flowchart of an air interface reservation method according to an embodiment of this application. As shown in FIG. 2, the air interface reservation method includes the following steps.

In step 201, a first access device obtains first buffer information.

The first access device may be a primary access device or a secondary access device. The first access device is associated with a first STA. The first buffer information may be first uplink buffer information and/or first downlink buffer information. The first access device may buffer downlink data to be sent to the first STA. The first downlink buffer information indicates a size of the downlink data to be sent by the first access device to the first STA. The first STA may buffer uplink data to be sent to the first access device. The first uplink buffer information indicates a size of the uplink data to be sent by the first STA to the first access device. The first access device may periodically obtain the first uplink buffer information from the first STA.

In step 202, the first access device obtains second buffer information from a second access device.

The second access device is associated with a second STA. The second buffer information may be second uplink buffer information and/or second downlink buffer information. The second downlink buffer information indicates a size of downlink data to be sent by the second access device to the second STA. The second uplink buffer information indicates a size of uplink data to be sent by the second STA to the second access device. When the first access device is the primary access device, the second access device is the secondary access device. When the first access device is the secondary access device, the second access device is the primary access device or another secondary access device. In the WLAN, the secondary access device may periodically report buffer information to the primary access device. Therefore, when both the first access device and the second access device are the secondary access devices, the first access device can obtain the second buffer information from the second access device through the primary access device.

In step 203, the first access device allocates a second time period to the second access device based on the second buffer information, and allocates a first time period to the first access device based on the first buffer information.

The first access device may allocate duration of a time period based on a size of to-be-sent data. For example, the first buffer information is the first downlink buffer information. The second buffer information is the second downlink buffer information. If the size of the downlink data to be sent to the first STA is greater than the size of the downlink data to be sent to the second STA, duration of the first time period is longer than duration of the second time period. If the size of the downlink data to be sent to the first STA is less than the size of the downlink data to be sent to the second STA, the duration of the first time period is shorter than the duration of the second time period. If the size of the downlink data to be sent to the first STA is equal to the size of the downlink data to be sent to the second STA, the duration of the first time period is equal to the duration of the second time period. In actual application, the first access device may further allocate the duration of the time period based on a priority and/or the size of the to-be-sent data.

In step 204, the first access device sends a first control frame to the second access device.

In the foregoing examples of step 201 and step 202, the first access device obtains two pieces of buffer information. In actual application, the first access device may obtain N pieces of buffer information. N is an integer greater than 1. The N pieces of buffer information correspond one-to-one to N wireless access devices. For example, the first access device may further obtain third buffer information from a third access device. In the foregoing example of step 203, the first access device allocates two time periods based on the two pieces of buffer information. In actual application, the first access device may allocate N time periods based on the N pieces of buffer information. The N time periods correspond one-to-one to the N pieces of buffer information. The first control frame includes a first field. The first field includes a reservation list. The reservation list includes identifiers of N-1 wireless access devices or identifiers of N wireless access devices. The N-1 wireless access devices do not include the first access device. When a value of N-1 is greater than 1, the first control frame may be a multi-user request to send (multiple user-RTS, MU-RTS) frame. The MU-RTS frame may also be referred to as an MU-RTS trigger frame. When a value of N-1 is equal to 1, the first control frame may be a request to send (request to send, RTS) frame. The first access device sends the first control frame to the N-1 wireless access devices. The first field may be a destination MAC address field in the RTS frame or a user information list (User Info List) field in the MU-RTS frame.

In step 205, the second access device sends a clear to send (clear to send, CTS) frame to the first access device.

The first control frame is an unencrypted control frame. All access devices and STAs surrounding the first access device may receive the first control frame. The access device obtains the reservation list in the first control frame. When the reservation list includes the identifier of the access device, the access device returns the CTS frame. When the reservation list does not include the identifier of the access device, the access device discards the first control frame. In this embodiment of this application, the reservation list includes an identifier of the second access device. Therefore, the second access device returns the CTS frame based on the first control frame.

The first control frame includes duration information of a target time period. The target time period includes the foregoing N time periods. The STA and the access device that receive the first control frame stop, based on the duration information of the target time period, a random backoff process of CSMA/CA. For example, the STA and the access device set duration of the target time period on a local network allocation vector (network allocation vector, NAV). If the NAV does not count down to 0, the STA and the access device actively suspend a random backoff count value. Before the NAV counts down to 0, the random backoff count value thereof does not continue to count down. Similarly, the CTS frame is also an unencrypted control frame. All access devices and STAs surrounding the second access device may receive the CTS frame sent by the second access device. The CTS frame carries the duration information of the target time period. The STA and the access device that receive the CTS frame stop, based on the duration information of the target time period, the random backoff process of the CSMA/CA.

In step 206, the first access device sends scheduling information to the second access device.

In actual application, the N-1 wireless access devices that receive the first control frame each return a CTS frame. After the first access device receives any CTS frame, the first access device sends N-1 pieces of scheduling information to the N-1 wireless access devices. The N-1 wireless access devices correspond one-to-one to the N-1 pieces of scheduling information. Each piece of scheduling information includes corresponding information about a time period. The N-1 wireless access devices correspond one-to-one to the N-1 time periods. The N time periods include the N-1 time periods and the first time period. The scheduling information received by the second access device includes information about the second time period.

In step 207, the second access device performs air interface transmission in the second time period based on the scheduling information.

The second time period includes an uplink time period and/or a downlink time period. When the second time period includes the uplink time period, the second access device sends the downlink data to the second STA in the uplink time period. When the second time period includes the downlink time period, the second access device sends a trigger frame (trigger frame) to the second STA. The trigger frame is used for allocating an uplink slot for wireless transmission to the second STA, to indicate the second STA to upload the uplink data in the uplink time period. When the second time period includes the uplink time period and the downlink time period, the uplink time period is obtained based on the first uplink buffer information, and the downlink time period is obtained based on the first downlink buffer information.

In step 208, the first access device performs air interface transmission in the first time period.

In the foregoing step 203, the first access device allocates the first time period based on the first buffer information. The first access device performs air interface transmission in the first time period. It is similar to descriptions in the foregoing step 207 that, the first time period may also include an uplink time period and/or a downlink time period.

It should be understood that, in this embodiment of this application, there is no strictly limited time sequence relationship between step 207 and step 208. Similarly, there is also no strictly limited time sequence relationship between step 201 and step 202. There is also no strictly limited time sequence relationship between step 203, step 204, and step 205.

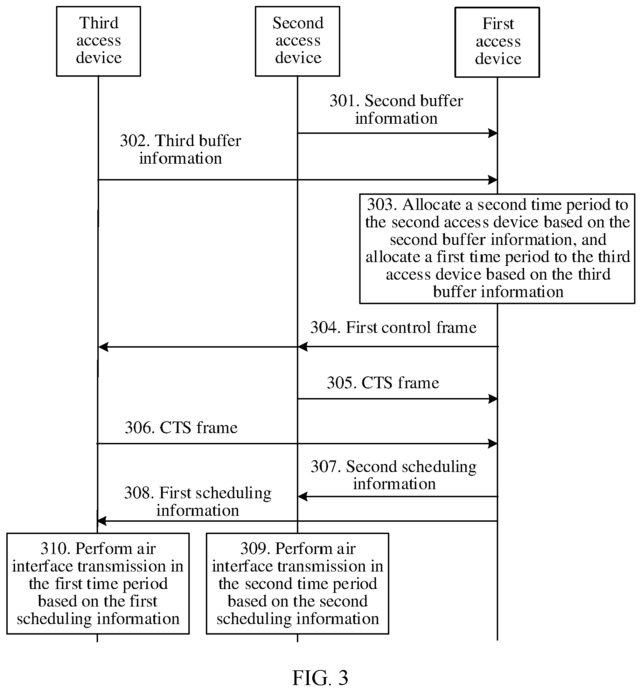

In the embodiment in FIG. 2, the first access device reserves, for the first access device, a time period used for air interface transmission. In some scenarios, the first access device may not need to allocate the time period to the first access device. For example, the first access device is associated with no STA. For another example, the first buffer information indicates that a size of to-be-transmitted data is 0. In this case, the first access device only needs to reserve, for another access device, a time period for air interface transmission. FIG. 3 is a second schematic flowchart of an air interface reservation method according to an embodiment of this application. As shown in FIG. 3, the air interface reservation method includes the following steps.

In step 301, a first access device obtains second buffer information from a second access device.

In step 302, the first access device obtains third buffer information from a third access device.

The first access device obtains N pieces of buffer information from N wireless access devices. N is an integer greater than 1. The N pieces of buffer information correspond one-to-one to the N wireless access devices. The N wireless access devices include the second access device and the third access device. When the first access device or the second access device is a primary access device, the third access device is a secondary access device. When the first access device and the second access device are the secondary access devices, the third access device is another secondary access device or the primary access device.

In step 303, the first access device allocates a second time period to the second access device based on the second buffer information, and allocates a first time period to the third access device based on the third buffer information.

In step 304, the first access device sends a first control frame to the second access device and the third access device.

The first access device may allocate N time periods based on the N pieces of buffer information. The N time periods correspond one-to-one to the N pieces of buffer information. The first control frame includes a first field. The first field includes a reservation list. The reservation list includes identifiers of the N wireless access devices.

In step 305, the second access device sends a CTS frame to the first access device.

In step 306, the third access device sends a CTS frame to the first access device.

The CTS frame sent by the third access device is also an unencrypted control frame. All access devices and STAs surrounding the third access device may receive the CTS frame sent by the third access device. The CTS frame carries duration information of a target time period. The STA and the access device that receive the CTS frame stop, based on the duration information of the target time period, a random backoff process of CSMA/CA.

In step 307, the first access device sends second scheduling information to the second access device.

In actual application, the N wireless access devices that receive the first control frame each return a CTS frame. After the first access device receives any CTS frame, the first access device sends N pieces of scheduling information to the N wireless access devices. The N wireless access devices correspond one-to-one to the N pieces of scheduling information. Each piece of scheduling information includes corresponding information about a time period. The N wireless access devices correspond one-to-one to the N time periods. The second scheduling information received by the second access device includes information about the second time period. First scheduling information received by the third access device includes information about the first time period.

In step 308, the first access device sends the first scheduling information to the third access device.

In step 309, the second access device performs air interface transmission in the second time period based on the second scheduling information.

In step 310, the third access device performs air interface transmission in the first time period based on the first scheduling information.

It should be understood that there is a similarity between descriptions of the air interface reservation method in FIG. 3 and the foregoing descriptions of the air interface reservation method in FIG. 2. Therefore, for the descriptions of the air interface reservation method in FIG. 3, refer to the foregoing descriptions of the air interface reservation method in FIG. 2. For example, for step 301, refer to the foregoing step 202. For step 303, refer to the foregoing step 202. For step 305, refer to the foregoing step 205. For step 309, refer to the foregoing step 207.

In a WLAN, the primary access device may divide multiple wireless access devices into one or more collision domains. Access devices in one collision domain use a same wireless communication frequency, and are close to each other. Access devices in different collision domains use different wireless communication frequencies, or are far away from each other. Therefore, a collision easily occurs between the access devices in one collision domain, and the collision does not easily occur between the access devices in different collision domains. A quantity of access device identifiers in the reservation list can be reduced through division of the collision domains. In the foregoing embodiment in FIG. 2, the quantity of identifiers included in the reservation list is N-1 or N. In the embodiment in FIG. 3, the quantity of identifiers included in the reservation list is N. When the quantity of identifiers is excessively large, excessively long time may need to be reserved for one control frame, and this is unfavorable to quality requirements of some low-latency services. Therefore, in actual application, the quantity of identifiers may range from 1 to 4. The quantity of identifiers may be 1 or 4.

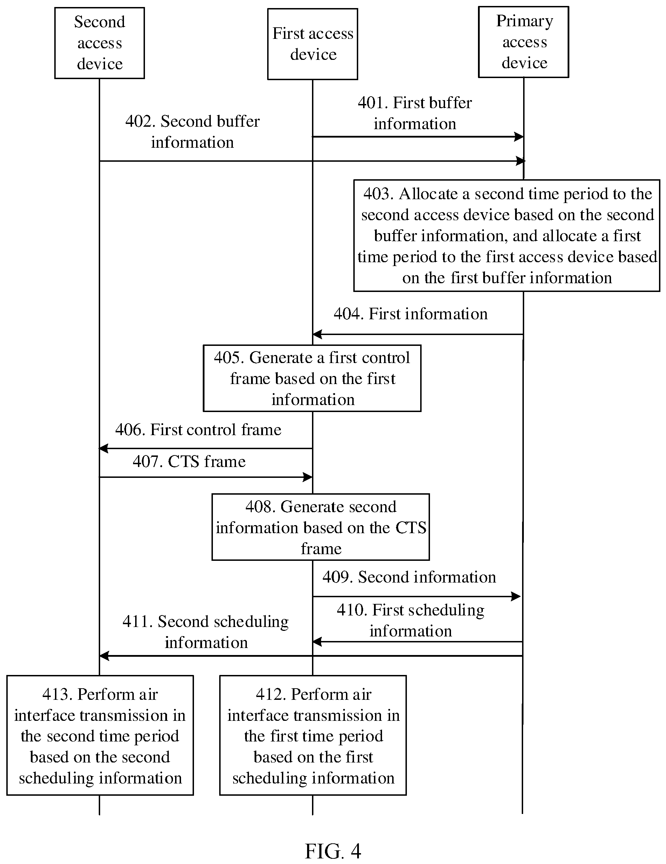

In actual application, the primary access device may specify a secondary access device as a control point in the collision domain. The control point performs air interface reservation, that is, sends the first control frame. The primary access device performs time allocation and air interface scheduling. FIG. 4 is a third schematic flowchart of an air interface reservation method according to an embodiment of this application. As shown in FIG. 4, the air interface reservation method includes the following steps.

In step 401, a primary access device receives first buffer information from a first access device.

The primary access device obtains N pieces of buffer information of N wireless access devices in a collision domain. The N pieces of buffer information include the first buffer information and second buffer information. The N pieces of buffer information correspond one-to-one to the N wireless access devices. The N wireless access devices include the first access device and a second access device. The first access device is a control point that is set for the primary access device.

In step 402, the primary access device receives the second buffer information from the second access device.

In step 403, the primary access device allocates a second time period to the second access device based on the second buffer information, and allocates a first time period to the first access device based on the first buffer information.

In step 404, the primary access device sends first information to the first access device.

The first information may be a unicast frame. A destination address of the unicast frame is an address of the first access device. The primary access device obtains a reservation list based on the N pieces of buffer information. The first information includes the reservation list. The reservation list may include identifiers of the N wireless access devices or N-1 access devices. The N-1 access devices do not include the first access device. The first information may further include duration information of a target time period.

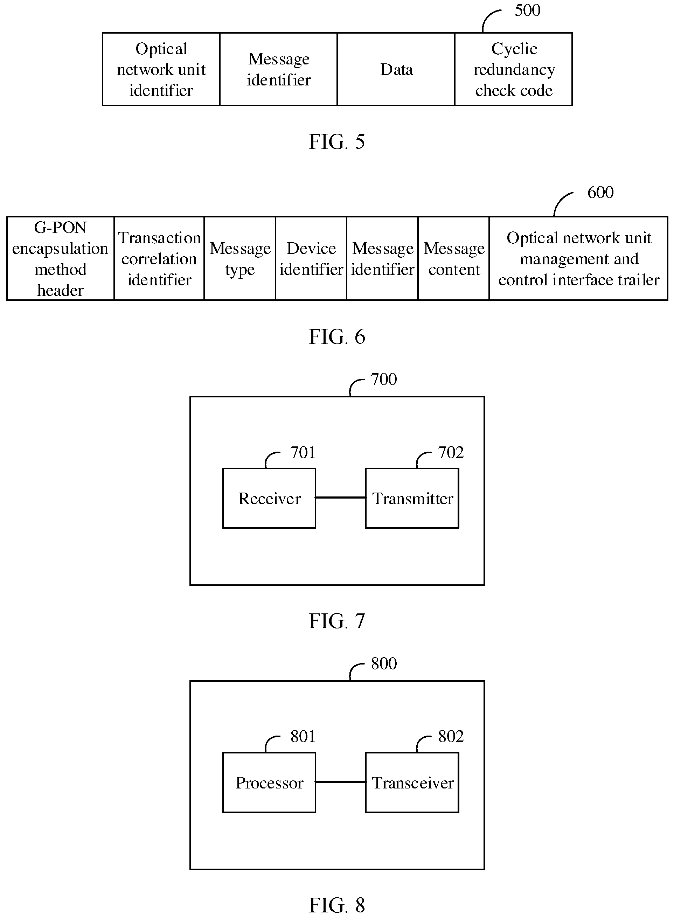

The first information may be a physical layer operations, administration and maintenance (physical layer operations, administration and maintenance, Ploam) frame or an optical network unit management and control interface (ONU management and control interface, OMCI) frame in the PON protocol. FIG. 5 is a schematic structural diagram of a Ploam frame. As shown in FIG. 5, the Ploam frame 500 includes an optical network unit identifier (optical network unit identifier, ONU-ID) field, a message identifier (message ID) field, a data (data) field, and a cyclic redundancy check (cyclic redundancy check, CRC) field. The reservation list may be the data field in the Ploam frame 500. FIG. 6 is a schematic structural diagram of an OMCI frame. As shown in FIG. 6, the OMCI frame 600 includes a G-PON (gigabit PON) encapsulation method header field, a transaction correlation identifier (transaction correlation identifier) field, a message type (message type) field, a device identifier (device identifier) field, a message identifier (message identifier) field, a message content (message content) field, and an optical network unit management and control interface trailer (OMCI trailer) field. The reservation list may be the message content field in the OMCI frame 600.

In step 405, the first access device generates a first control frame based on the first information.

The first access device fills the identifiers of the N-1 access devices in a first field of the first control frame. It can be learned from foregoing descriptions of step 205 in FIG. 2 that the first control frame further includes the duration information of the target time period. When the first information includes the duration information of the target time period, the first access device fills the duration information of the target time period of the first information in the first control frame. When the first information does not include the duration information of the target time period, the first access device fills default duration in the first control frame. For example, the default duration is 10 milliseconds.

In step 406, the first access device sends the first control frame to the second access device.

In step 407, the second access device sends a CTS frame to the first access device.

In step 408, the first access device generates second information based on the CTS frame.

In actual application, the N-1 wireless access devices that receive the first control frame each return a CTS frame. After the first access device receives any CTS frame, the first access device generates the second information. The second information represents that the first access device has completed air interface reservation. The second information may be the Ploam frame or the OMCI frame in the PON protocol.

In step 409, the first access device sends the second information to the primary access device.

In step 410, the primary access device sends first scheduling information to the first access device.

In step 411, the primary access device sends second scheduling information to the second access device.

In step 412, the first access device performs air interface transmission in the first time period based on the first scheduling information.

In step 413, the second access device performs air interface transmission in the second time period based on the second scheduling information.

In actual application, the identifiers of the N wireless access devices in the reservation list may include an identifier of the primary access device. In this case, the primary access device may also receive the first control frame. The primary access device returns the CTS frame based on the identifier of the primary access device in the first control frame. The CTS frame sent by the primary access device is also an unencrypted control frame. All access devices and STAs surrounding the primary access device may receive the CTS frame sent by the primary access device. The CTS frame carries the duration information of the target time period. The STA and the access device that receive the CTS frame stop, based on the duration information of the target time period, a random backoff process of CSMA/CA. The target time period further includes a third time period. The third time period is used for the primary access device to perform air interface transmission.

It should be understood that there is a similarity between descriptions of the air interface reservation method in FIG. 4 and the foregoing descriptions of the air interface reservation method in FIG. 2 or FIG. 3. Therefore, for the descriptions of the air interface reservation method in FIG. 4, refer to the foregoing descriptions of the air interface reservation method in FIG. 2 or FIG. 3. For example, for step 401, refer to the foregoing step 201. For step 403, refer to the foregoing step 203. For steps 406 and 407, refer to the foregoing steps 204 and 205.

It can be learned from the foregoing descriptions of FIG. 4 that the first access device in this application may reserve the default duration. In this case, the default duration may be greater than a sum of duration of the N time periods. Therefore, after the N wireless access devices complete air interface transmission, there is remaining air interface transmission time. In addition, the access device or the STA that receives the first control frame or the CTS frame does not perform the random backoff process of the CSMA/CA, and this causes a waste of an air interface. Therefore, in this embodiment of this application, the N wireless access devices may send a release frame. The release frame is used for releasing the remaining air interface transmission time. The following describes this by using examples.

In FIG. 2, the first access device determines whether the N time periods are used up. For example, the first control frame reserves an air interface transmission time period T1 to T3. T1 to T3 is the target time period. The first access device divides T1 to T2 in T1 to T3 into N time periods, and allocates the N time periods to the N wireless access devices. After determining that the N time periods are used up, for example, at a moment of T2, the first access device sends a release frame. The release frame is an unencrypted control frame. All access devices and STAs surrounding the first access device may receive the release frame. The STA and the access device that receive the release frame start the random backoff process of the CSMA/CA based on the release frame. For example, the STA and the access device set the NAV to 0. The release frame includes the identifiers of the N-1 wireless access devices. When the access device receives the release frame including the identifier of the access device, the access device also sends the release frame. For example, the second access device sends the release frame. Similarly, all access devices and STAs surrounding the second access device may receive the release frame sent by the second access device. The STA and the access device that receive the release frame start the random backoff process of the CSMA/CA based on the release frame.

In FIG. 4, the primary access device determines whether the N time periods are used up. After determining that the N time periods are used up, the primary access device sends third information to the first access device. The third information indicates the first access device to send the release frame. The third information may be the Ploam frame or the OMCI frame. After receiving the third information, the first access device sends the release frame. All access devices and STAs surrounding the first access device may receive the release frame. The STA and the access device that receive the release frame start the random backoff process of the CSMA/CA based on the release frame. Similarly, the release frame includes the identifiers of the N-1 wireless access devices. When the access device receives the release frame including the identifier of the access device, the access device also sends the release frame.

In this embodiment of this application, a wireless module of the secondary access device may have a complete wireless function. In this case, the wireless module includes a media access control (media access control, MAC) layer processing unit, a physical layer processing unit, and a radio frequency unit. In an uplink direction, the radio frequency unit is configured to: receive a radio signal of uplink data from an associated STA, and convert the radio signal into an in-phase quadrature (in-phase quadrature, IQ) signal. The physical layer processing unit is configured to perform physical layer-related processing on the IQ signal, such as synchronization, Fourier transform, mapping, or descrambling, to obtain a MAC layer packet. The physical layer processing unit is configured to transmit the MAC layer packet to the MAC layer processing unit. The MAC layer processing unit is configured to perform MAC layer-related processing on the MAC layer packet, such as, deframing, CRC, or acknowledge (acknowledge, ACK) frame returning, to obtain an internet protocol (internet protocol, IP) packet. The MAC layer processing unit is configured to transmit the IP packet to the primary access device. For example, the secondary access device further includes an optical module, and the secondary access device transmits the IP packet to the primary access device through the optical module.

In this embodiment of this application, the wireless module of the secondary access device may not have the complete wireless function. For example, the wireless module of the secondary access device includes a physical layer processing unit and a radio frequency unit, and does not include a MAC layer processing unit. The secondary access device is configured to transmit the MAC layer packet to the primary access device. A MAC layer processing unit of the primary access device is configured to perform MAC layer-related processing on the MAC layer packet. For another example, a wireless module of a first secondary device includes a radio frequency unit, and does not include a physical layer processing unit or a MAC layer processing unit. The secondary access device is configured to transmit the IQ signal to the primary access device. The physical layer processing unit of the primary access device is configured to perform physical layer-related processing on the IQ signal. The MAC layer processing unit of the primary device is configured to perform MAC layer-related processing on the MAC layer packet.

The foregoing describes the air interface reservation method provided in this application, and the following describes an access device and a communication system provided in this application. FIG. 7 is a first schematic structural diagram of an access device according to an embodiment of this application. As shown in FIG. 7, the access device 700 includes a receiver 701 and a transmitter 702. The receiver 701 and the transmitter 702 are a wireless receiver and a wireless transmitter in a radio frequency unit. The transmitter 702 is configured to send a first control frame. The first control frame includes a first field. The first field includes an identifier of a second access device. The receiver 701 is configured to receive, from the second access device, a CTS frame returned in response to the first control frame. The first control frame is used for reserving a target time period. The target time period includes a first time period and a second time period. The first time period is used for the first access device or a third access device to perform air interface transmission. The second time period is used for the second access device to perform air interface transmission.

It should be understood that there is a similarity between descriptions of the access device 700 and the foregoing descriptions of the air interface reservation method in FIG. 2 to FIG. 4. Therefore, for the descriptions of the access device 700, refer to the foregoing descriptions of the air interface reservation method. For example, for the descriptions of the access device 700, refer to the foregoing descriptions of the first access device in FIG. 2 to FIG. 4.

FIG. 8 is a second schematic structural diagram of an access device according to an embodiment of this application. As shown in FIG. 8, the access device 800 includes a transceiver 802 and a processor 801. The transceiver 802 is configured to receive a first control frame from a first access device. The first control frame includes a first field. The first field includes an identifier of a second access device. The transceiver 802 is further configured to return a CTS frame based on the first control frame. The transceiver 802 is further configured to receive scheduling information, where the scheduling information is obtained based on the CTS frame returned in response to the first control frame. The processor 801 may be a central processing unit (central processing unit, CPU), a network processor (network processor, NP), or a combination of the CPU and the NP. The processor 801 may further include a hardware chip or another general-purpose processor. The foregoing hardware chip may be an application-specific integrated circuit (application-specific integrated circuit, ASIC), a programmable logic device (programmable logic device, PLD), or a combination of the ASIC and the PLD. The processor 801 is configured to perform air interface transmission in a second time period based on the scheduling information. The first control frame is used for reserving a target time period. The target time period includes a first time period and the second time period. The first time period is used for the first access device or a third access device to perform air interface transmission.

In another embodiment, the transceiver 802 includes a wireless module and an optical transceiver module. The wireless module is configured to: receive the first control frame from the first access device, and return the CTS frame based on the first control frame. The optical transceiver module is configured to receive the scheduling information. When the first time period includes a downlink time period, the processor 801 sends downlink data to an associated STA through the wireless module. When the first time period includes an uplink time period, the processor 801 sends a trigger frame to the associated STA through the wireless module, and receives uplink data from the associated STA.

It should be understood that there is a similarity between descriptions of the access device 800 and the foregoing descriptions of the air interface reservation method in FIG. 2 to FIG. 4. Therefore, for the descriptions of the access device 800, refer to the foregoing descriptions of the air interface reservation method. For example, for the descriptions of the access device 800, refer to the foregoing descriptions of the second access device or the third access device in FIG. 2 to FIG. 4.

In another embodiment, the access device 700 and/or the access device 800 may further include a memory. The memory may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store a reservation list and/or duration information of the target time period.

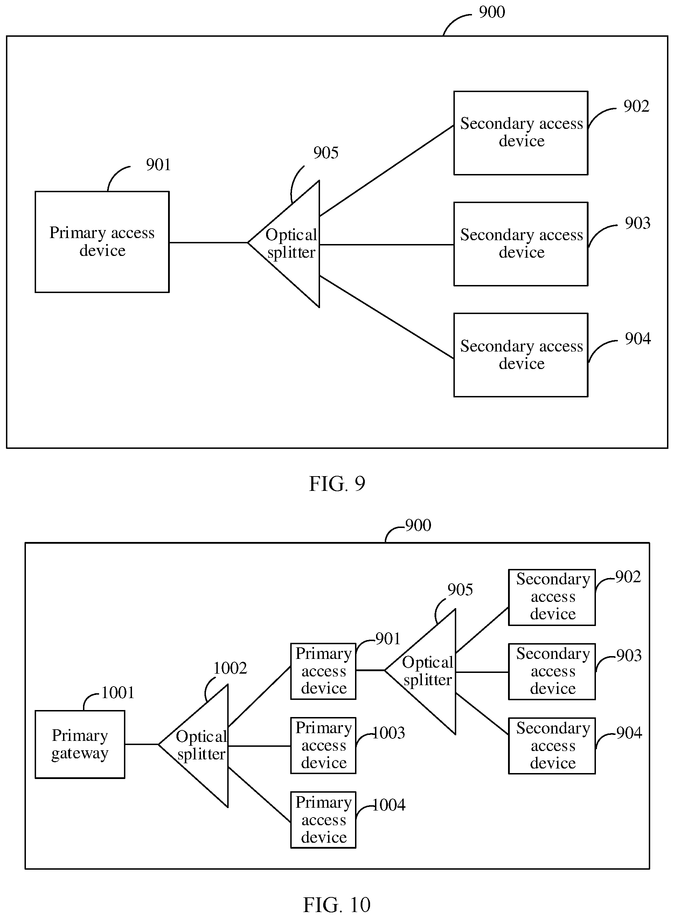

This application further provides a communication system. FIG. 9 is a first schematic structural diagram of a communication system according to an embodiment of this application. As shown in FIG. 9, the communication system 900 includes N wireless access devices. N is an integer greater than 1. The N wireless access devices include a primary access device 901 and N-1 secondary access devices. In an example in FIG. 9, the N-1 secondary access devices include secondary access devices 902 to 904. The primary access device 901 is connected to the N-1 secondary access devices. The N wireless access devices include a first access device and a second access device. The first access device is configured to send a first control frame. The first control frame includes a first field. The first field includes an identifier of the second access device. The second access device is configured to: receive the first control frame, and return a CTS frame. The first control frame is used for reserving a target time period. The target time period includes a first time period and a second time period. The first time period is used for one access device in the N wireless access devices to perform air interface transmission. The second time period is used for the second access device to perform air interface transmission.

In actual application, when the primary access device 901 is connected to N-1 secondary access devices through an optical fiber, the communication system 900 further includes an optical splitter 905. In an uplink direction, an uplink optical signal from each of the secondary access devices is coupled to the primary access device 901 through the optical splitter 905 in a time division manner. In a downlink direction, the primary access device 901 distributes downlink optical signals to all the secondary access devices through the optical splitter 905.

It should be understood that there is a similarity between descriptions of the communication system 900 and the foregoing descriptions of the air interface reservation method in FIG. 2 to FIG. 4. Therefore, for the descriptions of the communication system 900, refer to the foregoing descriptions of the air interface reservation method in FIG. 2 to FIG. 4. For example, for descriptions of the first access device, refer to the foregoing descriptions of the first access device in FIG. 2 to FIG. 4. For descriptions of the second access device, refer to the foregoing descriptions of the second access device in FIG. 2 to FIG. 4.

FIG. 10 is a second schematic structural diagram of a communication system according to an embodiment of this application. As shown in FIG. 10, based on FIG. 9, the communication system 900 further includes a primary gateway 1001, an optical splitter 1002, a primary access device 1003, and a primary access device 1004. The primary gateway 1001 may be an OLT. The primary gateway 1001 is connected to multiple primary access devices through the optical splitter 1002. In an example in FIG. 10, the multiple primary access devices include a primary access device 901, a primary access device 1003, and a primary access device 1004. The primary access device may be an ONU or an ONT. In an uplink direction, an uplink optical signal from each primary access device is coupled to the primary gateway 1001 through the optical splitter 1002 in a time division manner. In a downlink direction, the primary gateway 1001 distributes downlink optical signals to all the primary access devices through the optical splitter 1002.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication system, comprising N wireless access devices, wherein N is an integer greater than 1, wherein
the N wireless access devices comprise a first access device and a second access device;
the first access device is configured to send a first control frame, wherein the first control frame comprises a first field, and the first field comprises an identifier of the second access device;
the second access device is configured to: receive the first control frame, and return a clear to send CTS frame; and
the first control frame is used for reserving a target time period, wherein the target time period comprises a first time period and a second time period, the first time period is used for one access device in the N wireless access devices to perform air interface transmission, and the second time period is used for the second access device to perform air interface transmission.

2. The communication system according to claim 1, wherein
the first access device is further configured to: receive the CTS frame returned in response to the first control frame, and send scheduling information to the second access device based on the CTS frame returned in response to the first control frame; and
the second access device is further configured to perform air interface transmission in the second time period based on the scheduling information.

3. The communication system according to claim 1, wherein the N wireless access devices further comprise a primary access device;
the primary access device is configured to transmit first information to the first access device, wherein the first information comprises information in the first field; and
the first access device is further configured to generate the first control frame based on the first information.

4. The communication system according to claim 3, wherein the first information further comprises duration information of the target time period.

5. The communication system according to claim 3 or 4, wherein
the first access device is further configured to: receive the CTS frame returned in response to the first control frame, generate second information based on the CTS frame returned in response to the first control frame, and send the second information to the primary access device;
the primary access device is further configured to: send first scheduling information to the first access device based on the second information, and send second scheduling information to the second access device based on the second information, wherein the first scheduling information comprises information about the first time period, and the second scheduling information comprises information about the second time period;
the first access device is further configured to perform air interface transmission in the first time period based on the first scheduling information; and
the second access device is further configured to perform air interface transmission in the second time period based on the second scheduling information.

6. The communication system according to any one of claims 3 to 5, wherein the first information is a physical layer operations, administration and maintenance Ploam frame or an optical network unit management and control interface OMCI frame, and the information in the first field is located in a data field in the Ploam frame or a message content field in the OMCI frame.

7. The communication system according to any one of claims 3 to 6, wherein the first field further comprises an identifier of the primary access device;
the primary access device is further configured to: receive the first control frame, and return a CTS frame; and
the target time period further comprises a third time period, wherein the third time period is used for the primary access device to perform air interface transmission.

8. The communication system according to any one of claims 1 to 7, wherein a quantity of access device identifiers comprised in the first field ranges from 1 to 4.

9. The communication system according to any one of claims 1 to 8, wherein the one access device is a third access device in the N wireless access devices, and the first field further comprises an identifier of the third access device;
the third access device is configured to: receive the first control frame, and return a CTS frame; and
the first control frame is a multi-user request to send MU-RTS frame.

10. The communication system according to any one of claims 1 to 6 and 8, wherein the first field comprises only the identifier of the second access device, and the first control frame is a request to send RTS frame.

11. An air interface reservation method, comprising:
sending, by a first access device, a first control frame, wherein the first control frame comprises a first field, and the first field comprises an identifier of a second access device;
receiving, by the first access device from the second access device, a clear to send CTS frame returned in response to the first control frame; and
the first control frame is used for reserving a target time period, wherein the target time period comprises a first time period and a second time period, the first time period is used for the first access device or a third access device to perform air interface transmission, and the second time period is used for the second access device to perform air interface transmission.

12. The air interface reservation method according to claim 11, wherein the method further comprises:
sending, by the first access device, scheduling information to the second access device based on the CTS frame returned in response to the first control frame, wherein the scheduling information is used for the second access device to perform air interface transmission in the second time period.

13. The air interface reservation method according to claim 11, wherein the method further comprises:
receiving, by the first access device, first information from a primary access device, wherein the first information comprises information in the first field; and
generating, by the first access device, the first control frame based on the first information.

14. The air interface reservation method according to claim 13, wherein the first information further comprises duration information of the target time period.

15. The air interface reservation method according to claim 13 or 14, wherein the method further comprises:
receiving, by the first access device, the CTS frame returned in response to the first control frame, generating second information based on the CTS frame returned in response to the first control frame, and sending the second information to the primary access device, wherein the second information is used for the primary access device to generate first scheduling information and second scheduling information, and the second scheduling information is used for the second access device to perform air interface transmission in the second time period; and
receiving, by the first access device, the first scheduling information from the primary access device, and performing air interface transmission in the first time period based on the first scheduling information.

16. The air interface reservation method according to any one of claims 13 to 15, wherein the first information is a physical layer operations, administration and maintenance Ploam frame, or an optical network unit management and control interface OMCI frame, and the information in the first field is located in a data field in the Ploam frame or a message content field in the OMCI frame.

17. The air interface reservation method according to any one of claims 13 to 16, wherein the first field further comprises an identifier of the primary access device, the target time period further comprises a third time period, and the third time period is used for the primary access device to perform air interface transmission.

18. The air interface reservation method according to any one of claims 11 to 17, wherein a quantity of access device identifiers comprised in the first field ranges from 1 to 4.

19. The air interface reservation method according to any one of claims 11 to 18, wherein
that the first time period is used for the first access device or a third access device to perform air interface transmission comprises: the first time period is used for the third access device to perform air interface transmission; and
the first field further comprises an identifier of the third access device, and the first control frame is a multi-user request to send MU-RTS frame.

20. The air interface reservation method according to any one of claims 11 to 16 and 18, wherein
that the first time period is used for the first access device or the third access device to perform air interface transmission comprises: the first time period is used for the first access device to perform air interface transmission; and
the first field comprises only the identifier of the second access device, and the first control frame is a request to send RTS frame.

21. An air interface reservation method, comprising:
receiving, by a second access device, a first control frame from a first access device, wherein the first control frame comprises a first field, and the first field comprises an identifier of the second access device;
returning, by the second access device, a clear to send CTS frame based on the first control frame; and
receiving, by the second access device, scheduling information, wherein the scheduling information is obtained based on the CTS frame returned in response to the first control frame, and performing air interface transmission in a second time period based on the scheduling information, wherein the first control frame is used for reserving a target time period, the target time period comprises a first time period and the second time period, and the first time period is used for the first access device or a third access device to perform air interface transmission.

22. The air interface reservation method according to claim 21, wherein
the receiving, by the second access device, scheduling information comprises: receiving, by the second access device, the scheduling information from the first access device, wherein the scheduling information is obtained by the first access device based on the CTS frame returned in response to the first control frame.

23. The air interface reservation method according to claim 21, wherein
the receiving, by the second access device, scheduling information comprises: receiving, by the second access device, the scheduling information from a primary access device, wherein the scheduling information is obtained by the primary access device based on second information, and the second information is obtained by the first access device based on the CTS frame returned in response to the first control frame.

24. The air interface reservation method according to any one of claims 21 to 23, wherein
that the first time period is used for the first access device or a third access device to perform air interface transmission comprises: the first time period is used for the third access device to perform air interface transmission; and
the first field further comprises an identifier of the third access device, and the first control frame is a multi-user request to send MU-RTS frame.

25. The air interface reservation method according to any one of claims 21 to 23, wherein
that the first time period is used for the first access device or a third access device to perform air interface transmission comprises: the first time period is used for the first access device to perform air interface transmission; and
the first field comprises only the identifier of the second access device, and the first control frame is a request to send RTS frame.

26. An access device, comprising a receiver and a transmitter, wherein
the transmitter is configured to send a first control frame, wherein the first control frame comprises a first field, and the first field comprises an identifier of a second access device;
the receiver is configured to receive, from a second access device, a clear to send CTS frame returned in response to the first control frame; and
the first control frame is used for reserving a target time period, wherein the target time period comprises a first time period and a second time period, the first time period is used for the first access device or a third access device to perform air interface transmission, and the second time period is used for the second access device to perform air interface transmission.

27. The access device according to claim 26, wherein
the transmitter is further configured to send scheduling information to the second access device based on the CTS frame returned in response to the first control frame, wherein the scheduling information is used for the second access device to perform air interface transmission in the second time period.

28. The access device according to claim 26, wherein
the receiver is further configured to receive first information from a primary access device, wherein the first information comprises information in the first field; and
the access device further comprises a processor, wherein
the processor is configured to generate the first control frame based on the first information.

29. An access device, comprising a transceiver and a processor, wherein
the transceiver is configured to receive a first control frame from a first access device, wherein the first control frame comprises a first field, and the first field comprises an identifier of a second access device;
the transceiver is further configured to return a clear to send CTS frame based on the first control frame;
the transceiver is further configured to receive scheduling information, wherein the scheduling information is obtained based on the CTS frame returned in response to the first control frame; and
the processor is configured to perform air interface transmission in a second time period based on the scheduling information, and the first control frame is used for reserving a target time period, wherein the target time period comprises a first time period and the second time period, and the first time period is used for the first access device or a third access device to perform air interface transmission.

30. The access device according to claim 29, wherein
the transceiver is specifically configured to receive the scheduling information from the first access device, wherein the scheduling information is obtained by the first access device based on the CTS frame returned in response to the first control frame.

31. The access device according to claim 29, wherein
that the transceiver is further configured to receive scheduling information comprises: the transceiver is configured to receive the scheduling information from a primary access device, wherein the scheduling information is obtained by the primary access device based on second information, and the second information is obtained by the first access device based on the CTS frame returned in response to the first control frame.
